# EUROPEAN PATENT APPLICATION

(11) **EP 4 760 148 A1**
(43) Date of publication of application: **17.06.2026**
(21) Application number: 25222266.6
(22) Date of filing: 10.12.2025
(51) Int. Cl.: F23C 5/08, B01J 12/00, B01J 8/06

(54) **HYBRID PROCESS FURNACE**

(30) Priority: 11.12.2024 IT 202400028143
(71) Applicant: Vergaengineering S.p.A., 20124 Milano (MI) (IT)
(72) Inventor: GARZOGLIO, ETTORE GIORGIO JOHN, I-20129 MILANO (MI) (IT); GIOCONDI, DAVIDE, I-20017 RHO (MI) (IT); LOVATI, ADRIANO EDOARDO, I-20081 ABBIATEGRASSO (MI) (IT); COMPRI, CESARE MASSIMO, I-37131 VERONA (VR) (IT)
(74) Representative: Dragotti & Associati S.P.A.

(57) **Abstract**

A hybrid process furnace (1) comprises a main structure consisting of a radiant section (10) and a convective section (20). The radiant section (10) comprises a chamber (12), comprising one or more side walls (14), a plurality of process tubes (18) configured to receive within them a process fluid to be processed, one or more burners (11) arranged below with respect to the radiant section (10) and facing inside the chamber (12). The convective section (20) defines within it a channel (22) in which a bundle of tubes (28, 28') is arranged. The radiant section (10) further comprises a plurality of layers of insulating material (13) engaged to the inner surface of the side walls (14) of the chamber (12), and a plurality of heating elements (30) anchored to the layers of insulating material (13).

## Description

The present invention relates to the petrochemical industry, and in particular to the field of refinery furnaces and furnaces for petrochemical plants. The present invention has been developed with particular reference to a hybrid process furnace.

Traditional industrial process furnaces are provided with burners that burn fossil fuels to produce thermal energy that is then used for various industrial purposes, such as providing the required heat to a process fluid. The combustion of fossil fuels involves a chemical reaction between the fuel and oxygen, resulting in the release of energy in the form of heat. However, this process also produces important by-products, including carbon dioxide (CO₂), carbon monoxide (CO), sulphur oxides (SOx), nitrogen oxides (NOx) and particulate matter.

For example, natural gas consists mainly of methane (CH₄) which, when burnt, reacts with oxygen (O2) to produce carbon dioxide (CO₂) and water (H₂O). Similarly, the combustion of oil and coal, consisting of various hydrocarbons, also leads to the formation of carbon dioxide and other pollutants such as sulphur dioxide (SO₂) and nitrogen oxides (NOx).

In recent years, the push towards decarbonisation and climate neutrality has been gaining momentum. The petrochemical field, as a major emitter of CO₂, is significantly affected, in order to minimise (in the short/medium term) or eliminate (in the long term) both emissions of climate-altering gases (CO₂) and pollutants in general (CO, NOx).

Consequently, there is a growing demand for more efficient and environmentally-friendly heating technologies that can reduce these harmful emissions and mitigate their negative effects on the planet.

For example, process furnaces are known comprising, instead of fossil fuel burners, electrically-powered heat generators, e.g. electric heating elements, capable of supplying a predetermined amount of heat to a process fluid.

These solutions have the obvious advantage, for the above objectives, of a total absence of pollutant emissions, no flames, and therefore no combustion products to be expelled from the system. At the same time, the use of electricity entails higher costs with respect to fossil fuels, and electricity can be difficult to obtain, especially considering the power levels required by the application in question.

The need has therefore arisen for a solution that can support the industry's transition to decarbonisation and climate neutrality, while at the same time ensuring operating efficiency and reliability.

In view of this requirement, the Applicant has devised to make, according to the invention, a hybrid process furnace as defined in independent claim 1.

The dependent claims outline preferred and/or particularly advantageous aspects of the invention.

Further characteristics and advantages of the present invention will become apparent from the following description, given only by way of example, with reference to the accompanying drawings, in which:

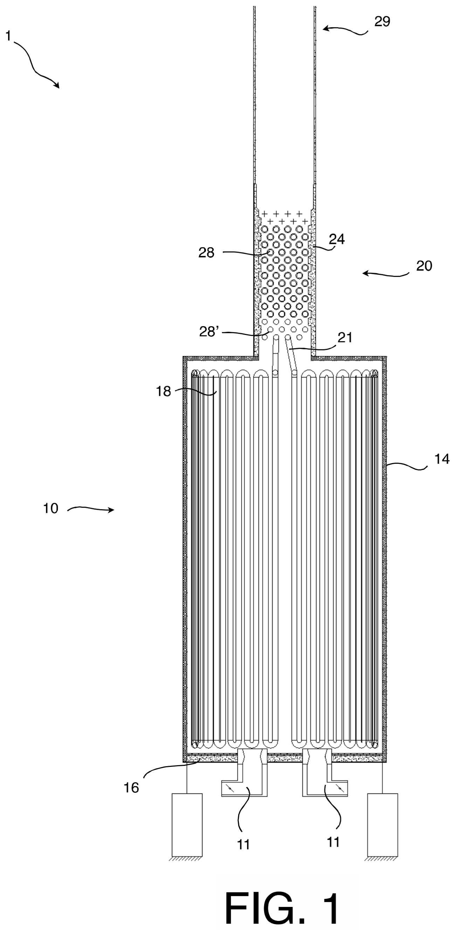

- Figure 1 is a schematic sectional view of a first embodiment of a hybrid process furnace according to the present invention;

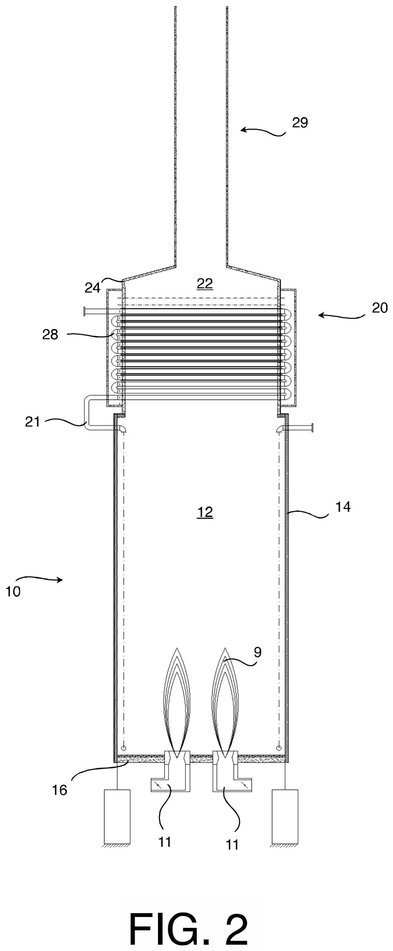

- Figure 2 is a schematic view of a different section of the furnace of Figure 1;

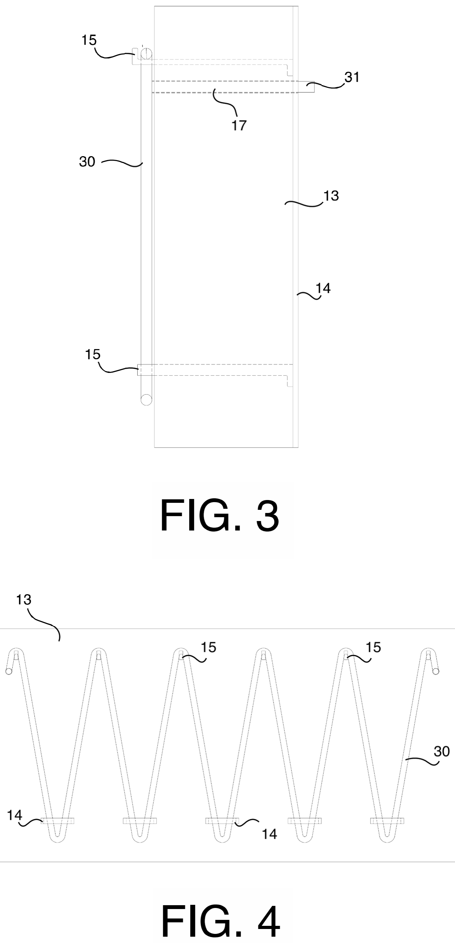

- Figure 3 is a schematic sectional view of an insulating panel and a heating element according to the present invention;
- Figure 4 is a front view of the panel of Figure 3;
- Figure 5 is a sectional view of the interior of the furnace of Figure 1;
- Figure 6 is a schematic sectional view of a second embodiment of a hybrid process furnace according to the present invention;

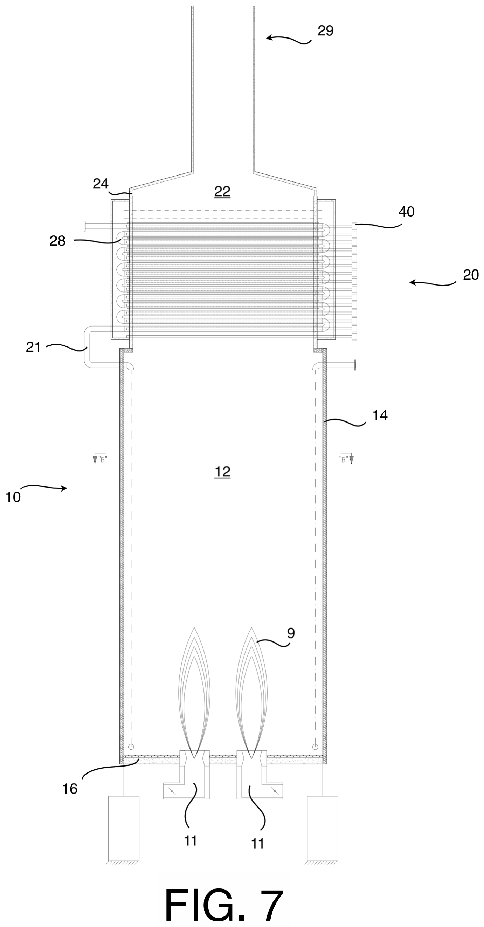

- Figure 7 is a schematic view of a different section of the furnace of Figure 6;

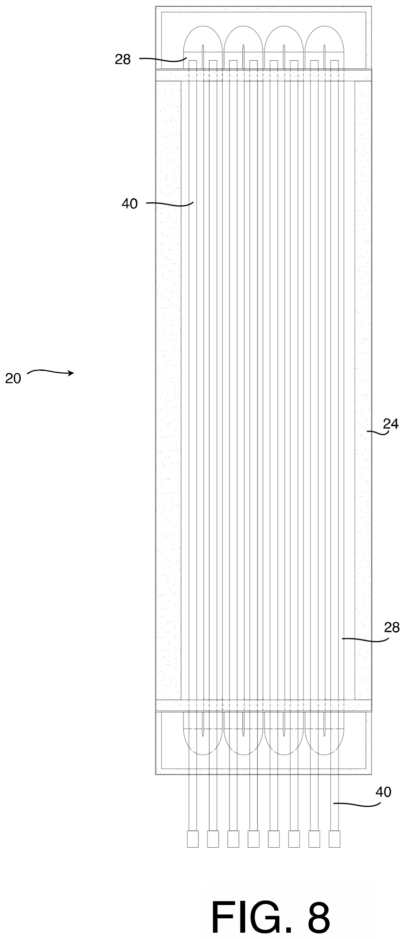

- Figure 8 is a sectional view of a convective section of a furnace according to the present invention; and
- Figure 9 is a sectional view of a further embodiment of a convective section of a hybrid process furnace according to the present invention.

It is to be understood that elements and characteristics of one embodiment may conveniently be incorporated into other embodiments without further clarifications.

Reference is now made in detail to the various embodiments of the invention, one or more of which are shown in the accompanying drawings. Each example is provided merely to illustrate the invention and is not intended as a limitation thereof. For example, the technical characteristics illustrated or described because they belong to one embodiment may be implemented in, or in association with, other embodiments in order to generate a further embodiment. It is understood that the present invention is comprehensive of such modifications and variants.

According to one of the embodiments of the present invention, a hybrid process furnace, generically indicated with 1, comprises a main structure comprising a radiant section 10 and a separate convective section 20. The main structure illustrated can have a vertical cylindrical shape in which the radiant section 10 has a greater diameter than the diameter of the convective section 20, but of course different types of main structures can also be adopted, such as, for example, a 'cabin' or 'box' structure. The main structure of the hybrid process furnace 1 can comprise an outer structure made of steelwork.

The radiant section 10 comprises an internally insulated chamber 12, comprising one or more side walls 14 and a bottom wall 16. A plurality of process tubes 18 are arranged inside the chamber 12, configured to receive within them a process fluid to be processed and connected together to define a fluid path.

In accordance with the embodiments illustrated in the figures, the plurality of process tubes 18 is shaped in a 'coil': each process tube 18 comprises a longitudinally extending main portion, which is connected along the fluid path to longitudinally extending main portions of a preceding and a subsequent process tube 18 by means of connecting elements, e.g. curved elements or concentric/eccentric reductions.

According to the embodiments illustrated in the figures, the process tubes 18 are arranged vertically within the chamber 12, i.e. their longitudinally extending main portion is oriented along a vertical axis, i.e. an axis orthogonal to the plane defined by the bottom wall 16 of the chamber 12.

Preferably, but not limitedly, the process tubes 18 are arranged detached from, not in contact with, the side walls 14 of the chamber 12, even more preferably they are arranged at a reduced distance, i.e. close to, the side walls 14 of the chamber 12.

According to embodiments, the process tubes 18, in particular their longitudinally extending main portions, extend substantially over the entire height of the side walls 14.

According to embodiments, the process tubes 18 can be engaged to and/or supported on the side walls 14 and/or the bottom wall 16, for example by means of supports anchored to the side walls 14 and/or the bottom wall 16. Of course, based on the characteristics of the process load and the required capacity of the hybrid process furnace 1, other arrangements of the process tubes 18 different than those illustrated may be adopted. For example, their longitudinally extending main portion may be oriented along a horizontal axis, or they may assume, for example, a configuration with a helical extension. Similarly, the process tubes 18 can be arranged in different positions within the chamber 12, e.g., in a central position or on the bottom walls.

The radiant section 10 of the hybrid process furnace 1 according to the present invention comprises a combustion heating system comprising one or more burners 11 arranged facing inside the chamber 12, i.e. arranged so that the flame 9 produced faces inside the chamber 12, which, therefore, is also referred to as a combustion chamber 12. The one or more burners 11 are, preferably, arranged in the lower portion of the radiant section 10 and are fed with fossil fuel, e.g. gas, from a distribution network via a pipeline (not shown) connected to the burners 11.

The convective section 20 of the hybrid process furnace 1 is arranged, preferably, above the radiant section 10, i.e. on its top, and comprises one or more side walls 24 defining within them a channel 22, in which a second plurality of process tubes is arranged, for example a bundle of tubes 28, 28' configured to receive within them a process fluid to be processed. The bundle of pipes 28, 28' is connected, preferably by one or more fittings 21, to the coil of process tubes 18 arranged in the radiant section 10.

Preferably, the bundle of tubes 28, 28' is distributed to occupy the entire space of the channel 22 so that, in use, the hot gas (air or combustion fumes) coming from the combustion chamber 12 of the radiant section 10 below hits the bundle of tubes 28, 28', thus allowing the exchange of heat between the hot gas and the bundle of tubes 28, 28' that is lapped by it.

The hybrid process furnace 1 further comprises a chimney 29, arranged above convection section 20, and configured to vent the gases exiting from the convection section 20 into the atmosphere.

According to the embodiment illustrated, the radiant section 10 comprises a plurality of layers of insulating material, e.g. panels 13 made of cement or ceramic fibre, engaged to the inner surface of the side walls 14 of the combustion chamber 12. The panels 13 comprise a plurality of anchors or supports 15 and a plurality of through-holes 17.

The panels 13 are configured to provide high thermal insulation while maintaining structural integrity at high temperatures, which is critical for efficient heat transfer and energy conservation in high-temperature processes.

The radiant section 10 of the hybrid process furnace 1 according to the present invention further comprises an electric heating system. According to an advantageous characteristic of the present invention, the combustion heating system, the electric heating system of process tubes are all arranged within a single section, within the radiant section 10, without the interposition of any shielding or baffle therebetween.

According to embodiments, the electric heating system comprises a plurality of heating elements 30, e.g., electrical resistors, engaged to the combustion chamber 12, preferably, but not limitedly, engaged to the side walls 14, even more preferably engaged to the panels 13 of the radiant section 10 by means of the supports 15. Preferably, the supports 15 are configured to ensure the necessary electrical insulation of the heating elements 30 from the other components.

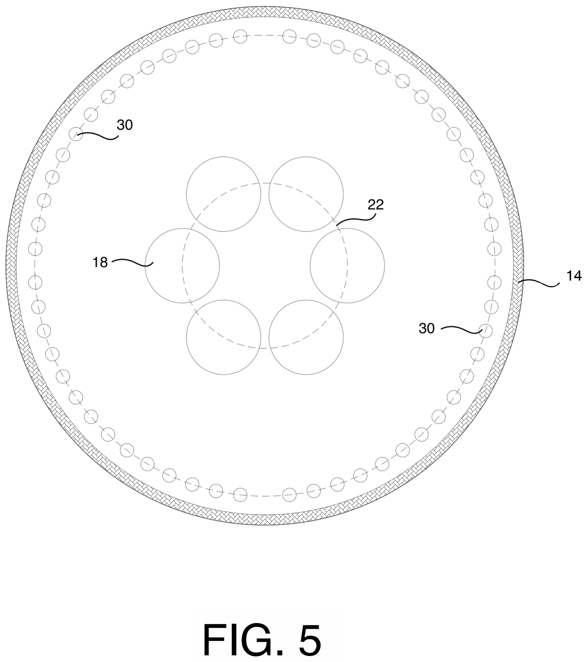

The heating elements 30 can be made of high temperature-resistant materials such as nichrome or ferro-chrome-aluminium. According to the embodiment of Figure 5, the heating elements 30 are evenly distributed with respect to the arrangement of the process tubes 18 within the combustion chamber 12. Preferably, the heating elements 30 have a similar shape to the longitudinally extending main portions of the process tubes 18 to ensure an efficient distribution of heat by radiation to the process fluid flowing in the coil of process tubes 18 within the combustion chamber 12.

In the embodiments in which the process tubes 18 are arranged in the centre of the combustion chamber 12, the process tubes 18 are radiated by the heat emitted by the heating elements 30 and the one or more burners 11 from both sides, while in embodiments in which the process tubes are arranged along a side wall 14, the process tubes 18 are radiated by the heat emitted by the heating elements 30 from one side and the one or more burners 11 from the opposite side, as shown in the figures.

This direct heating system ensures a uniform temperature profile and the same average heat flow as that provided by flames in fossil fuel-only furnaces.

The electric heating system further comprises a power supply circuit for the heating elements, i.e. an electric heating element supply circuit. Each electrical heating element 30 comprises a pair of terminals 31 inserted inside the through-holes 17 and connected, by electrical cables, i.e. power cables, to an electrical power source, e.g. a distribution/control panel outside the furnace 1.

Preferably, the heating elements 30 are connected to each other in groups in a series configuration. The various groups of heating elements in series are then connected together in a 'star' or 'triangle' configuration in order to be connected to a three-phase power supply.

Preferably, between the terminals 31 of the heating elements 30 at the ends
of each branch in series and the power cables are arranged in suitable junction boxes per classified area. The connection between each terminal 31 and the junction box passes through the side wall 14 by means of specific joints, capable of ensuring the necessary thermal and electrical insulation.

The total number of heating elements 30 is divided into several groups with independent three-phase power supplies from different thyristor (T) systems, in order to allow dedicated power control in the different zones of the hybrid process furnace 1 and to allow precise control of the heat flow.

As is evident from the above, the hybrid process furnace according to the present invention, in its essentially conventional configuration in terms of construction and geometry, provides for the coexistence of two heating systems with different types of heat sources, a fuel-based one (natural gas, refinery gas, synthesis gas, hydrogen), and an electrical one (heating elements). The two heat sources are configured to be able to operate individually or simultaneously, with different possible distribution percentages between one and the other, as will become clear in the following.

The solution of the present invention allows flexible operation of a process furnace, using one or both heat sources to optimise energy use, reduce emissions and ensure continuous operation even when the availability of electricity is limited.

Furthermore, the presence of the heating elements 30 provides greater homogeneity of heat flow to the process tubes, the coil of process tubes 18, resulting in lower heat loads to the tubes at the same flow rate with respect to the presence of a flame. Last but not least, the presence of the electric heating elements 30 allows greater thermal efficiency, as the only heat lost is that by radiation from the outer surfaces of the equipment towards the environment, through the insulation, and the loss due to the expulsion of the gases produced by the combustion system is null in the case of operation without a burner, or reduced in the case of hybrid operation.

According to other embodiments, a hybrid process furnace 1 further comprises a second plurality of heating elements 40, e.g. electrical resistors, arranged between the radiant section 10 and the convective section 20, preferably between the tubes of the tube bundle 28, 28' inside the convective section 20. These electric heating elements 40 are also connected to the electrical power circuit of the heating elements, and thus, via power cables, to the distribution/control panel outside the furnace 1.

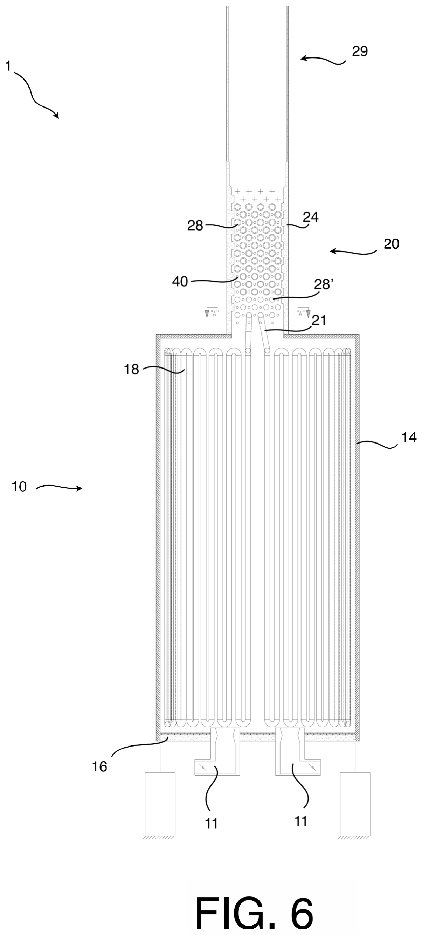

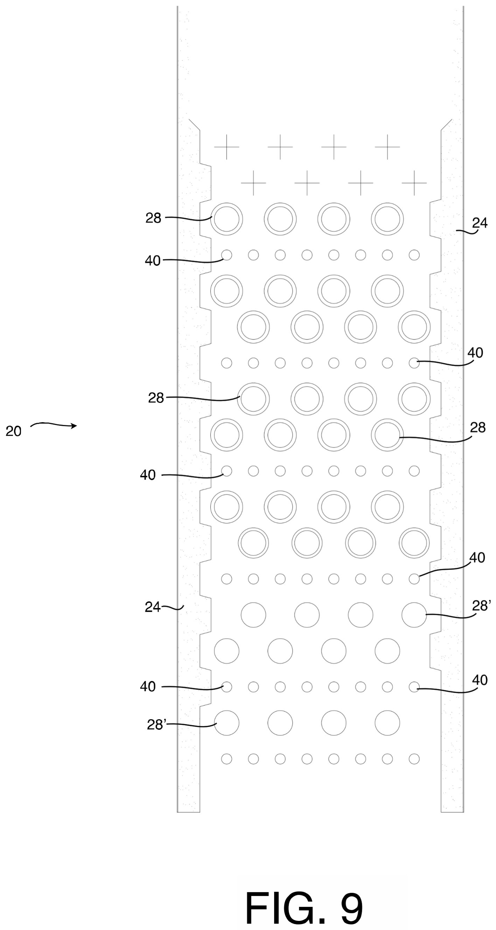

Preferably, the second plurality of heating elements 40 is arranged according to a predetermined configuration, e.g. in a single row or several rows, or arranged with a triangular pitch, so as to ensure an adequate and efficient exchange coefficient. According to embodiments, the heating elements 40 can be placed between one tube and another in each row of tubes 28, 28', creating a geometric configuration mirroring that of the tubes 28, 28', as illustrated in Figure 6. According to other embodiments, the heating elements 40 can be placed in rows alternating with the rows of tubes 28, 28', as illustrated in Fig. 9.

According to the illustrated embodiments, the tube bundle 28, 28' can comprise finned tubes 28 and/or smooth tubes 28', preferably smooth tubes 28' in the lower rows of the tube bundle and finned tubes 28 in the upper rows of the tube bundle.

The task of the heating elements 40 installed in the convective section 20 is to supply heat to the tube bundle 28, 28' of the convective section 20. The transmission of heat from the heating elements 40 to the tube bundle 28, 28' takes place either by direct radiation or by convection, thanks to a stream of flue gas (in the case of 'hybrid' gas/electric operation) or air (in the case of electric-only operation).

To ensure proper operation, the electric heating elements 40 can have, preferably, decreasing power values to follow the temperature profile required by the process fluid and to follow the different heat flow allowed by the finned tubes 28 with respect to the smooth tubes 28'.

In general, the presence of finned tubes 28 is required to optimise heat recovery from the flow of crossing gas, both in the case of the furnace 1 operating with gas only (in which case there would be combustion fumes), and in the case of the furnace 1 operating with electricity only (in which case there would be air).

All of the heating elements 30, 40 described so far, in the radiant section 10 and convective section 20, are configured to be capable of operating in the presence of combustion fumes, whether the (fossil fuel) burners 11 are in operation or not.

In the case of combustion-only or hybrid operation of the furnace 1, the flue gases leaving the convective section 20 can be sent directly to the chimney 29 to be discharged into the atmosphere or sent to a combustion air preheater where they are cooled to increase efficiency. If the furnace 1 is operated only electrically, the air can be recirculated in a similar manner.

If it is anticipated that the available electrical power would not be sufficient to cover 100% of the load, the heating system can be sized for lower capacities, covering the remaining demand with combustion.

This design flexibility allows the hybrid process furnace 1 to operate in fully electric mode, where all the heat is provided by the electric heating elements 30, 40, in fully combustion mode, where traditional fossil fuel combustion is used, or in a hybrid mode combining both methods. This adaptability not only improves operating efficiency, but also provides the ability to switch between heat sources based on availability and cost, thus offering significant operating and economic advantages. The ability to operate in multiple modes makes the hybrid process furnace 1 of the present invention very versatile and suitable for various industrial applications, where precise temperature control and energy efficiency are critical.

The hybrid process furnace 1 according to the present invention can further comprise a safety and control system specifically configured for the possibility of having hybrid, combustion-electric operation.

The safety and control system comprises an electric heating unit configured for safety and control of the electric heating. This unit can comprise:
- one or more thyristors (T), configured to control the voltage values to the heating elements 30, 40,
- one or more current meters (MCs), configured to measure current values input to the heating elements 30, 40, and
- one or more switches (INT), configured to selectively interrupt the electric power supply circuit of the heating elements 30, 40.

The safety and control system comprises a combustion unit configured for safety and combustion control. This unit can comprise, along the fossil fuel supply line to the burners 11:
- a gas flow transmitter (TPg),
- one or more block valves (VB),
- a gas flow/pressure control valve (VCPg) to the burners 11,
- a first gas pressure transmitter (TPg1) to the burners 11,
- a second gas pressure transmitter (TPg2), and
- one or more flame presence sensors (Sf) at the burners 11.

If the gas flow transmitter (TPg) is not of the 'mass' (Coriolis) type, a pressure transmitter and a temperature transmitter are also provided, in order to perform the compensation and derive the correct mass flow.

The safety and control system comprises a process line unit configured for the safety and control of the process lines. This unit can comprise:
- a process fluid flow transmitter (TPfp) arranged upstream of the furnace 1,
- a first process fluid temperature transmitter (TTfp1) downstream of the furnace 1, preferably configured for safety functions,
- a plurality of tube skin temperature transmitters (TTpt),
- a second process fluid temperature transmitter (TTfp2) downstream of the furnace 1, preferably configured for control functions.

The safety and control system comprises a flue gas unit configured for the safety and control of the interior of the combustion chamber 12 and flue gas ducts. This unit can comprise:
- a flue gas pressure transmitter (TPf) at the outlet of the combustion chamber 12,
- a flue gas temperature transmitter (TTf) at the outlet of the combustion chamber 12,
- a flue gas oxygen analyser (AO₂f) at the outlet of the combustion chamber 12, and
- a flue gas pressure control damper (SCPf), arranged in the chimney 29.

The safety and control system comprises a logic solver unit. This unit can comprise an electronic board, e.g. a PLC configured to manage safety functions, and a distributed control system (DCS), configured to manage control loops, both acting on both the fossil fuel system and the electrical system.

The distributed control system operates according to an operating logic that aims to control the temperature of the process fluid output from the furnace 1 or, in general, the power absorbed by the process fluid passing through the furnace 1. Since the furnace can therefore operate either solely on fossil fuels, solely on electrical heating elements or in a hybrid manner, the power regulation will have auxiliary control loops integrated, specifically dedicated to the operating limits of the combustion and electrical heating system.

In the present description, the term 'transmitter' means a device for measuring a predetermined physical magnitude, e.g., but not limited to, a sensor, comprising a data transmission device. The transmitter can be connected, via cable or wirelessly, with a device in the logic solver unit, e.g. the PLC, or with an external computer system to which the PLC is also connected.

The safety and control logic of the electric heating unit comprises two groups of simple control loops: a main loop based on the output temperature of the process fluid, and one or more secondary loops (as many as there are zones into which the furnace is divided, based on the type of fluid being heated and the service conditions) based on the skin temperature of some process tubes 18, 28, 28' selected according to the process conditions of the fluid.

In particular, with regard to the heating elements 30 placed in the radiant section 10, the secondary control loops are divided based on the zones of the chamber 12 and the location of the process tubes 18 related to the various steps (number of parallel flows into which the process flow in the furnace is divided). Each secondary loop refers to its own group of tube skin temperature transmitters TTpt, e.g. one or more thermocouples, for both safety and control functions.

With regard to the convective section 20, the heating elements 40 are instead regulated taking into account both flue gas temperature values detected and transmitted by the flue gas temperature transmitter (TTf) and tube skin temperature values detected and transmitted by the tube skin temperature transmitters TTpt. This is because, given the distance of the heating elements 40 from the tubes 28, the radiation contribution from the radiant chamber 20 (for the lower rows) or from the heating elements 40 themselves is significant.

The secondary control loops operate automatically to maintain the maximum accepted tube or flue gas/air skin temperature downstream of the combustion chamber 12 constant at all times, based on the process trend, cracking and design conditions of the coil of process tubes 18.

The main control loop, configured to maintain a predetermined process fluid output temperature value, compares said predetermined process fluid output temperature value with a process fluid output temperature value received from the process fluid temperature transmitters TTfp arranged downstream of the furnace 1, and sends a power regulation request to the electric heating unit, as 0-100% of the maximum power deliverable.

In the event of a low power delivery demand or a decrease thereof, the output of the main control loop will be lower than that of the secondary loops and will lead, by means of the minimum selector switch, to a reduction in the power radiated by the heating elements 30, 40, by means of a reduction in the voltage at their ends.

Conversely, in the case of high power delivery demand, or in the case of internal coke formation on the tubes, when the tube skin temperature transmitters TTpt detect and transmit high tube skin temperature values, one or more secondary controllers require a reduction of the radiated heat, even if this results in a reduction of the process fluid temperature value at the outlet. In other words, the secondary loops cause the power level delivered by the electric heating system to be lower than the demand of the main control loop. This safety logic prevents the process tubes 18, 28, 28' from reaching excessive temperatures, resulting in rupture and leakage of the process liquid.

The simultaneous operation of the combustion system and the electric heating system is ensured by the presence of a selector switch, whereby the power demand based on the process parameter will be met by the electric or gas power for a manually selected amount, while the remaining heat will be provided by the remaining source to follow, depending on whether the first or second source is imposed (electric power follows or fuel combustion follows).

As far as the combustion unit is concerned, this is regulated by means of the gas flow/pressure control valve VCPg based on values detected and measured by the gas flow transmitter TPg and/or the gas pressure transmitter TPg at the burners 11, depending on the operating conditions. The signal on which the control is based is again the request for a predetermined power value received from the logic solver unit, based on the process fluid output temperature detected and transmitted by the process fluid temperature transmitter TTfp.

The increase or decrease of the process fluid output temperature detected and transmitted by the process fluid temperature transmitter TTfp with respect to what is required will lead to the respective increase or decrease of the gas flow rate to the burners by regulating the gas flow/pressure control valve (VCPg) at the burners 11.

If the gas flow required by the process fluid is high or low to the point that it leads to gas pressure values at the burners that are incompatible with their stable operation, auxiliary control loops are provided which aim, by means of maximum or minimum selector switches, to maintain the operating pressure values within the permissible range.

A further simple loop will reduce the heat demand in case the oxygen concentration value in the flue gas exiting the combustion chamber 12, detected and transmitted by the flue gas oxygen analyser AO₂f, approaches or exceeds a minimum permissible value.

The two heating systems, combustion and electric, can operate together in master-slave mode, chosen by the operator.

If the combustion system is set as slave, it will operate with predetermined constant gas flow or pressure values, producing a constant amount of heat. Variations in power demand will be delegated to the electrical component, in turn set as master, which will vary the supply voltage of the heating elements 30, 40 to follow the process demands.

If the electrical component is set as slave, it will operate with a predetermined constant voltage value, releasing a constant amount of heat. Variations in power demand will be delegated to the combustion heating system, in turn set as master, which will vary the gas flow rate or pressure to follow the process demands.

In addition to the above, a further simple loop is responsible for maintaining the correct (negative) pressure profile in the combustion chamber 12 by controlling the opening of the chimney damper based on the pressure value at the outlet of the combustion chamber 12.

The electric heating system will then be connected to the electronic board of the logic solver unit for the implementation of the instrumental safety functions, similarly to the fuel heating system. For example, the system will take over the task of disconnecting the power supply to the heating elements 30, 40 via the switches INT of the electric heating unit if process parameters, such as overcurrents or high temperatures of the tube skins, are exceeded or an emergency stop by the operator occurs.

Similarly, the combustion system will be connected to the electronic board of the logic solver unit, which will be responsible for interrupting the gas flow through the block valves VB of the combustion unit, if the process parameters are exceeded, such as, for example, the gas pressure at the burners, measured by the gas pressure transmitter VCPg, or the loss of flame, identified by the flame presence sensors Sf.

Certain types of deviation from the operating conditions will lead to a simultaneous blockage of the combustion heating system and the electric heating system by the safety system. Examples might be the low flow rate of process fluid in input to the furnace 1, the high process fluid temperature output from the furnace 1, or the high pressure in the combustion chamber 12.

The advantages of the present invention are numerous with respect to the state of the art, and especially in comparison to both fossil fuel-only furnaces and furnaces powered by electricity alone.

The hybrid system improves thermal efficiency by reducing the thermal losses associated with combustion processes. The electric heating elements provide a more even distribution of heat, reducing thermal stress on the process tubes and improving overall system efficiency.

The comparable or even lower cost without the loss of the system's ability to operate conventionally (i.e. through combustion) represents a significant reduction in investment risks, especially at a still-uncertain time related to the best-performing solution between combustion (hydrogen) and electric heating, on the general horizon of decarbonisation.

The almost instantaneous and continuous source selection considering the variables at play between gas (purchase, production, possible emission taxes) and electricity (purchase cost, committed power) allows an optimisation of operating costs.

Overcoming any limitations of available electrical power with respect to the power required by the process conditions.

The present invention is suitable both for the construction of completely new furnaces (both green field and brown field furnaces as replacements for existing furnaces) and for revamping existing furnaces, which allows a transition from gas to electric heating in several stages without replacing the equipment (e.g. first stage: gas operation, second stage: hybrid operation, third stage: electric operation).

The hybrid process furnace according to the present invention is particularly suitable for use in refining plants, chemical/petrochemical plants, natural gas processing plants and mining plants (upstream).

In summary, the competitive advantage of this invention lies in its ability to reduce emissions, provide operating flexibility, optimise costs, improve efficiency, offer scalability and industrial heating processes that comply with evolving environmental regulations.

## Claims

1. Hybrid process furnace (1) comprising a main structure comprising a radiant section (10) and a convective section (20), the radiant section (10) comprising a chamber (12), comprising one or more side walls (14), a plurality of process tubes (18) configured to receive within them a process fluid to be processed, one or more burners (11) arranged facing inside the chamber (12), the convective section (20) defining within it a channel (22) in which a bundle of tubes (28, 28') connected to the plurality of process tubes (18) is arranged, **characterised in that** the radiant section (10) comprises a plurality of layers of insulating material (13) engaged to the inner surface of the side walls (14) of the chamber (12), and a plurality of heating elements (30) anchored to the layers of insulating material (13).

2. Hybrid process furnace (1) according to claim 1, **characterised in that** the plurality of layers of insulating material comprise panels (13).

3. Hybrid process furnace (1) according to claim 2, **characterised in that** the panels (13) comprise a plurality of anchors (15) configured to anchor the heating elements (30) and a plurality of through-holes (17) configured to pass electrical cables connected to the heating elements (30) and to an electrical power source.

4. Hybrid process furnace (1) according to claim 1, **characterised in that** it comprises a second set of heating elements (40) arranged between the radiant section (10) and the convective section (20).

5. Hybrid process furnace (1) according to claim 4, **characterised in that** the heating elements (40) are positioned between the bundle of tubes (28, 28') in the convective section (20), and configured to provide heat by radiation and convection.

6. Hybrid process furnace (1) according to claim 5, **characterised in that** the second set of electric heating elements (40) are arranged in a predetermined configuration, such as in a single row or multiple rows at triangular pitch, to provide efficient heat exchange.

7. Hybrid process furnace (1) according to claim 5, **characterised in that** the bundle of tubes in the convective section (20) comprises finned tubes (28) and smooth tubes (28'), wherein the finned tubes (28) are positioned in the upper rows and the smooth tubes (28') in the lower rows to optimise heat recovery.

8. Hybrid process furnace (1) according to claim 5, **characterised in that** the second set of electric heating elements (40) have decreasing power values along the gas flow path.

9. A safety and control system of a hybrid process furnace (1) comprising a radiant section (10) having a chamber (12) and a plurality of electric heating elements (30, 40) configured to provide heat to a process fluid within a plurality of process tubes (18), a convection section (20) arranged above the radiant section (10) and comprising a bundle of tubes (28, 28') connected to the plurality of process tubes (18), and one or more fossil fuel burners (11) arranged in the chamber (12) configured to provide heat to the process fluid;
the safety and control system comprising:
- a programmable logic controller (PLC) and a distributed control system (DCS) configured to manage the safety functions and control loops;
- thyristors configured to control the voltage to the heating elements (30, 40);
- a gas flow/pressure control valve (VCPg) to regulate the flow of gas to the burners (11);
where the security and control system is configured to operate in a master-slave configuration, so that:
in a first mode, the electric heating elements (30, 40) operate as masters, with the thyristors adjusting the voltage in response to power requirements, and the fossil fuel burners (11) operate as slaves, maintaining a constant gas flow and heat output, as controlled by the gas flow/pressure control valve (VCPg);
in a second mode, the fossil fuel burners (11) operate as masters, with the gas flow/pressure control valve (VCPg) regulating the gas flow in response to power requirements, and the electric heating elements (30, 40) operate as slaves, maintaining a constant voltage controlled by the thyristors; and
wherein the PLC and DCS coordinate the transition between the first and second modes according to process conditions, ensuring optimal energy utilisation and process efficiency.
